(19) Europäisches Patentamt
European Patent Office
Office européen des brevets

(11) **EP 3 591 185 A1**

(12) **EUROPÄISCHE PATENTANMELDUNG**

(43) Veröffentlichungstag:
08.01.2020   Patentblatt 2020/02

(51) Int Cl.:
*F02B 37/22* (2006.01)     *F02B 37/24* (2006.01)
*F02M 26/06* (2016.01)     *F04D 27/02* (2006.01)
*F02D 41/00* (2006.01)     *F02D 41/14* (2006.01)
*F04D 25/04* (2006.01)     *F04D 29/42* (2006.01)
*F02B 37/12* (2006.01)

(21) Anmeldenummer: 19182697.3

(22) Anmeldetag: 26.06.2019

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **05.07.2018   DE 102018211091**

(71) Anmelder: **Volkswagen AG**
**38440 Wolfsburg (DE)**

(72) Erfinder:
• **Bartolome, Javier**
  **38102 Braunschweig (DE)**
• **Vahldiek, Manuel**
  **38102 Braunschweig (DE)**
• **Hagelstein, Dirk**
  **38110 Braunschweig (DE)**
• **Staats, Arne**
  **38518 Gifhorn (DE)**
• **Heinken, Sebastian**
  **38106 Braunschweig (DE)**

(54) **VERFAHREN ZUM BETREIBEN EINER BRENNKRAFTMASCHINE MIT EINEM DEM VERDICHTER ZUGEORDNETEN TRIMMSTELLER**

(57)    Es ist ein Verfahren zum Betreiben einer Brennkraftmaschine vorgesehen, wobei die Brennkraftmaschine zumindest einen Verbrennungsmotor und einen Frischgasstrang umfasst und wobei in den Frischgasstrang ein Verdichter integriert ist, dem ein Trimmsteller zugeordnet ist, durch den ein randseitiger Abschnitt des Eintrittsquerschnitts eines Verdichterlaufrads des Verdichters in veränderlichem Maße abdeckbar ist. Dabei ist der randseitige Abschnitt des Eintrittsquerschnitts in einer Freigabestellung des Trimmstellers relativ wenig und in einer Abdeckstellung des Trimmstellers relativ weitgehend abgedeckt. Vorgesehen ist, dass der Trimmsteller zwischen der Freigabestellung und der Abdeckstellung verstellt wird, wenn in den beiden Betriebsstellungen im Wesentlichen dasselbe Verdichterdruckverhältnis ($\pi_V$) und im Wesentlichen derselbe Frischgasmassenstrom ($\dot{m}$) sowie im Wesentlichen derselbe Verdichterwirkungsgrad erreicht wird. Dadurch kann ein möglichst vorteilhaftes Verstellen des Trimmstellers realisiert werden.

FIG. 4

EP 3 591 185 A1

**Beschreibung**

Die Erfindung betrifft ein Verfahren zum Betreiben einer Brennkraftmaschine und eine zur Durchführung eines solchen Verfahrens geeignete Brennkraftmaschine. Die Erfindung betrifft auch ein Kraftfahrzeug mit einer solchen Brennkraftmaschine.

In einem Verdichter einer Brennkraftmaschine wird das über einen Frischgasstrang einem Verbrennungsmotor der Brennkraftmaschine zuzuführende Frischgas verdichtet. Dabei ist die Anhebung des Drucks des Frischgases von der Drehzahl des Verdichterlaufrads sowie von dem Massenstrom des über das Verdichterlaufrad geführten Frischgases abhängig. In Richtung der sogenannten Pumpgrenze des Verdichterkennfelds erfolgt die Anströmung der Eintrittskanten der Laufradschaufeln infolge der gegenüber der Umfangsgeschwindigkeit abnehmenden Anströmgeschwindigkeit zunehmend druckseitig, d.h. die Inzidenz der Anströmung nimmt stetig zu. Ab einem betriebspunktabhängigen Grenzwert der Inzidenz, der sogenannten Pumpgrenze, löst die Strömung an den Eintrittskanten ab und die Strömung im Verdichter wird instabil. Im Bereich der Pumpgrenze bildet sich an der einlassseitigen Gehäusekontur des Verdichters ein Rückströmgebiet impulsarmen Fluids aus. Diese sogenannte Rückströmblase führt durch Drall- und Mischungsverluste zu einem Abfall des Verdichterwirkungsgrads. Im Bereich der Nabenkontur des Laufrads verläuft aber auch nahe der Pumpgrenze eine impulsreiche und verlustarme Kernströmung durch den Verdichter, die den Massendurchsatz und den Druckaufbau bestimmt.

Ein Trimmsteller, wie er beispielsweise aus der DE 10 2010 026 176 A1, der EP 3 018 355 A1, der DE 10 2015 209 704 A1, der DE 10 2014 225 716 A1 oder der WO 2014/131790 A1 bekannt ist, dient der Verschiebung der Pumpgrenze eines Verdichterkennfelds in Richtung relativ niedriger Massenströme bei hohen Druckverhältnissen. Gleichzeitig kann ein Trimmsteller im Bereich der Pumpgrenze einen Anstieg des Verdichterwirkungsgrads bewirken. Hierzu umfasst ein Trimmsteller eine Vorrichtung, durch die der Anströmquerschnitt, in dem das Laufrad des Verdichters angeströmt wird, veränderbar ist. Durch die so erreichte Düsenwirkung des Trimmstellers kann mit zunehmendem Regeleingriff (Verkleinerung des Anströmquerschnitts) die Gasströmung stärker auf den nabennahen Eintrittsquerschnitt des Verdichterlaufrads fokussiert werden. Dadurch strömt weniger Gas in den impulsarmen und verlustbehafteten Bereich der Rückströmblase und die Kernströmung im nabennahen Bereich wird beschleunigt und dadurch zusätzlich stabilisiert. Die Beschleunigung der Gasströmung im nabennahen Bereich des Verdichterlaufrads hat zusätzlich eine Verschiebung der Anströmung des Verdichterlaufrads zur Folge, was zu einer weiteren Stabilisierung der Gasströmung beitragen kann. Die Stabilisierung der Kernströmung führt zu der gewünschten Verschiebung der Pumpgrenze des Verdichterkennfelds zu geringeren Massenströmen. Bei nicht gewünschtem Regeleingriff (Trimmsteller vollständig geöffnet) wird möglichst der gesamte Querschnitt des Frischgasstrangs vor dem Verdichterlaufrad freigegeben, so dass in der dann gegebenen Anströmung des Verdichterlaufrads möglichst keine zusätzlichen Reibungs- oder Drosselverluste entstehen. Der Verdichterwirkungsgrad und die Breite des Verdichterkennfelds werden deshalb in Richtung der Stopfgrenze nicht in einem relevanten Maße negativ durch einen Trimmsteller beeinflusst.

Die WO 2004/022956 A1 offenbart ein Verfahren, durch das ein Betrieb eines Verdichters einer Brennkraftmaschine im Bereich der Pumpgrenze vermieden werden soll. Hierbei ist vorgesehen, das Verhalten des Verdichters mittels eines Luftströmungssensors, der in einem Ansaugtrakt der Brennkraftmaschine angeordnet ist, hinsichtlich eines charakteristischen Schwingungsverhaltens des den Ansaugtrakt durchströmenden Frischgases zu überwachen. Wird auf diese Weise ein kurzfristig drohendes Erreichen der Pumpgrenze ermittelt, wird der Wert für den zu erzielenden Soll-Ladedruck reduziert, wozu eine den Verdichter antreibende Abgasturbine mittels einer Verstellung einer Vorrichtung zur variablen Turbinenanströmung (VTG) in entsprechend veränderter Weise angeströmt wird.

Der Erfindung lag die Aufgabe zugrunde, eine mittels eines Verdichters aufgeladene Brennkraftmaschine zu entwickeln, die sich durch ein möglichst optimales Betriebsverhalten auszeichnet.

Diese Aufgabe wird durch ein Verfahren zum Betreiben einer Brennkraftmaschine gemäß dem Patentanspruch 1 gelöst. Eine zur automatisierten Durchführung eines solchen Verfahrens geeignete Brennkraftmaschine ist Gegenstand des Patentanspruchs 6. Vorteilhafte Ausführungsformen des erfindungsgemäßen Verfahrens und bevorzugte Ausgestaltungsformen der erfindungsgemäßen Brennkraftmaschine sind Gegenstände der weiteren Patentansprüche und/oder ergeben sich aus der nachfolgenden Beschreibung der Erfindung.

Erfindungsgemäß ist ein Verfahren zum Betreiben einer Brennkraftmaschine vorgesehen, wobei die Brennkraftmaschine zumindest einen Verbrennungsmotor und einen Frischgasstrang umfasst, wobei in den Frischgasstrang ein Verdichter integriert ist und wobei dem Verdichter ein Trimmsteller zugeordnet ist, durch den ein randseitiger Abschnitt des Eintrittsquerschnitts eines Verdichterlaufrads des Verdichters in veränderlichem Maße abdeckbar ist, wobei der randseitige Abschnitt des Eintrittsquerschnitts in einer Freigabestellung des Trimmstellers relativ(im Vergleich zu einer Abdeckstellung) wenig, vorzugsweise geringstmöglich (d.h. so wenig, wie es durch die konstruktive Ausgestaltung möglich ist), und in der Abdeckstellung des Trimmstellers relativ (im Vergleich zu der Freigabestellung) weitgehend, vorzugsweise weitestmöglich (d.h. so weitgehend, wie es durch die konstruktive Ausgestaltung möglich ist, wobei diese Maximalstellung als für einen entsprechenden Betrieb des Verdichters als optimal ermittelt wurde), abgedeckt ist. Um ein möglichst vorteilhaftes Umschalten zwischen diesen Betriebsstellungen des Trimmstellers zu erreichen, ist vorgesehen, dass der Trimmsteller zwischen der Freigabestellung und der Abdeckstellung, d. h. von der Freigabestellung in die Abdeckstellung oder andersherum, verstellt wird, wenn in beiden Betriebsstellungen dasselbe (bis 1% Abweichung) Verdichterdruckverhältnis und derselbe (bis 1% Abweichung) Frischgasmassenstrom durch den Verdichter (insbesondere im Wesentlichen derselbe reduzierte Frischgasmassenstrom) sowie im Wesentlichen (bis 5%, vorzugsweise bis 2% Abweichung) derselbe Verdichterwirkungsgrad erreicht wird. Dies ermöglicht ein Verstellen des Trimmstellers ohne Rückwirkungen auf motorische Parameter, d.h. ohne Unstetigkeit im Verlauf des von der Brennkraftmaschine erzeugten Drehmoments und ohne die Notwendigkeit weiterer motorischer Eingriffe, wie beispielsweise eine Verstellung einer Drosselklappe, eines Nockenwellenstellers und/oder des Zündwinkels in Betrieb der Brennkraftmaschine.

Das Verdichterdruckverhältnis ist dabei als das Verhältnis des Absolutdrucks $p_2$ des Frischgases auf der Hochdruckseite des Verdichters zu dem Absolutdruck $p_1$ des Frischgases auf der Niederdruckseite des Verdichters definiert. Der reduzierte Frischgasmassenstrom $\dot{m}_{red}$ berechnet sich aus dem tatsächlichen Massenstrom $\dot{m}$, der Temperatur $T_{vV}$ des Frischgases auf der Niederdruckseite des Verdichters, einer Referenztemperatur $T_{ref}$ (293,15 K), dem Absolutdruck $p_{vV}$ des Frischgases auf der Niederdruckseite des Verdichters und eines Referenzdrucks $p_{ref}$ (1000 mbar) gemäß folgender Formel:

$$\dot{m}_{red} = \dot{m} \cdot \sqrt{\frac{T_{vV}}{T_{ref}} \cdot \frac{p_{ref}}{p_{vV}}}$$

Eine zur automatisierten Durchführung eines erfindungsgemäßen Verfahrens geeignete Brennkraftmaschine umfasst zumindest einen Verbrennungsmotor (insbesondere einen (selbstzündenden und qualitätsgeregelten) Dieselmotor oder einen (fremdgezündeten und quantitätsgeregelten) Ottomotor oder eine Kombination daraus, z.B. einen Verbrennungsmotor mit homogener Kompressionszündung) und einen Frischgasstrang, wobei in den Frischgasstrang ein Verdichter integriert ist und wobei dem Verdichter ein Trimmsteller zugeordnet ist, durch den ein randseitiger Abschnitt des Eintrittsquerschnitts eines Verdichterlaufrads des Verdichters in veränderlichem Maße abdeckbar ist. Dabei ist der randseitige Abschnitt des Eintrittsquerschnitts in einer Freigabestellung des Trimmstellers relativ wenig, vorzugsweise geringstmöglich, und in einer Abdeckstellung des Trimmstellers relativ weitgehend, vorzugsweise weitestmöglich, abgedeckt. Weiterhin umfasst eine solche Brennkraftmaschine eine Steuerungsvorrichtung, die zur automatisierten Durchführung eines erfindungsgemäßen Verfahrens eingerichtet ist.

Als "Eintrittsebene" des Verdichterlaufrads wird erfindungsgemäß die bezüglich des Trimmstellers am nächsten gelegene, senkrecht zu der Rotationsachse des Verdichterlaufrads ausgerichtete Ebene verstanden, die von Laufradschaufeln des Verdichterlaufrads definiert wird, indem zumindest ein punktförmiger Abschnitt eines, mehrerer oder aller Eintrittskanten dieser Laufradschaufeln innerhalb dieser Ebene angeordnet ist. Der "Eintrittsquerschnitt" des Verdichterlaufrads ist dann der in dieser Eintrittsebene gelegene Öffnungsquerschnitt des Strömungsraums.

Der Trimmsteller einer erfindungsgemäßen Brennkraftmaschine kann grundsätzlich beliebig, beispielsweise gemäß einer der Ausführungsformen, wie sie in der DE 10 2010 026 176 A1, der EP 3 018 355 A1, der DE 10 2015 209 704 A1, der DE 10 2014 225 716 A1 oder der WO 2014/131790 A1 offenbart sind, ausgestaltet sein.

Gemäß einer bevorzugten Ausgestaltungsform umfasst der Trimmsteller einer erfindungsgemäßen Brennkraftmaschine eine ringförmige Blende. Die Blende kann dabei beispielsweise in Form einer Irisblende, wie sie grundsätzlich auch von Fotoobjektiven bekannt ist, ausgeführt sein. Alternativ kann die Blende auch einen insbesondere ringförmigen Stator und einen insbesondere ringförmigen Rotor umfassen, die in längsaxialer Richtung nebeneinander angeordnet sind, wobei sowohl der Stator als auch der Rotor jeweils mindestens eine Durchgangsöffnung ausbilden, wobei diese Durchgangsöffnungen durch eine Rotation des Rotors relativ zu dem Stator in verschiedene Relativpositionen bewegt werden können, in denen diese nicht, teilweise oder vollständig in Überdeckung liegen. Ein Trimmsteller, der lediglich eine solche Blende umfasst, kann sich durch eine relativ einfache konstruktive Ausgestaltung auszeichnen.

Gemäß einer bevorzugten Weiterbildung eines solchen Trimmstellers mit ringförmiger Blende kann vorgesehen sein, dass dieser zusätzlich noch eine Strömungsführungsvorrichtung umfasst, durch die zumindest ein Abschnitt des Frischgasstrangs in einen zentralen Strömungsbereich und einen peripheren Strömungsbereich unterteilt ist, die beide in dem Bereich der Eintrittsebene des Verdichterlaufrads in einen das Verdichterlaufrad aufnehmenden Strömungsraum des Verdichters übergehen, wobei der periphere Strömungsbereich mittels der Blende bedarfsweise verschließbar ausgebildet ist. Die Blende kann dabei vorzugsweise an dem stromaufwärts gelegenen Ende des peripheren Strömungsbereichs angeordnet sein. Mittels einer solchen Kombination aus Blende und Strömungsführungsvorrichtung kann, im Vergleich zu einem Trimmsteller, der lediglich eine ringförmige Blende umfasst, die Funktion des Trimmstellers insbesondere hinsichtlich der positiven Wirkung auf das Verdichterkennfeld verbessert werden.

Noch weiter verbessern lässt sich die Wirkung eines solchen Trimmstellers mit Blende und Strömungsführungsvorrichtung, wenn zumindest ein zu dem Verdichterlaufrad benachbart gelegener Endabschnitt der Strömungsführungsvorrichtung, gegebenenfalls die gesamte Strömungsführungsvorrichtung, längsaxial (d.h. entlang der Rotationsachse des Verdichterlaufrads) verschiebbar ausgebildet ist, wobei der periphere Strömungsbereich in dem Bereich der Eintrittsebene des Verdichterlaufrads in einer Verschlussstellung der Strömungsführungsvorrichtung durch diesen Endabschnitt verschlossen und in einer Öffnungsstellung freigegeben ist.

Da die Verdichterwirkungsgrade während des Betriebs der Brennkraftmaschine nicht direkt gemessen werden können, kann der Abgasdruck stromaufwärts einer Abgasturbine, die drehantreibend mit dem Verdichter verbunden ist, für einen Betriebszustand des Motors für eine Aussage über den Gesamtwirkungsgrad des Abgasturboladers herangezogen werden. Eine erfindungsgemäße Brennkraftmaschine kann dafür einen in den Abgasstrang der Brennkraftmaschine stromauf der Abgasturbine integrierten Abgasdrucksensor umfassen. Vorzugsweise kann vorgesehen sein, dass in einem Applikationsbetrieb der Brennkraftmaschine für eine Mehrzahl von Betriebszuständen jeweils die Abgasdrücke stromaufwärts der Abgasturbine für einen Betrieb des Verdichters mit dem Trimmsteller in einerseits der Freigabestellung und in andererseits der Abdeckstellung ermittelt und davon ausgehend ein Verstellbereich für sämtliche Betriebszustände abgeleitet und insbesondere interpoliert wird, wobei der ermittelte Verstellbereich für einen Normalbetrieb der Brennkraftmaschine genutzt wird. Dies ermöglicht, durch relativ wenige Messungen im Rahmen eines Applikationsbetriebs, der insbesondere auf einem Prüfstand durchgeführt werden kann, ein Betriebskennfeld für die Brennkraftmaschine mit darin integriertem Verstellbereich abzuleiten. Dieser Verstellbereich hält dann für sämtliche Betriebszustände, die in dem Normalbetrieb der Brennkraftmaschine auftreten können, die für die Verstellung des Trimmstellers erforderlichen Informationen bereit.

Gemäß einer weiterhin bevorzugten Ausführungsform eines erfindungsgemäßen Verfahrens kann vorgesehen sein, dass zwischen der Freigabestellung und der Abdeckstellung verstellt wird, wenn bei identischen Verdichterdruckverhältnissen und Frischgasmassenström derselbe Verdichterwirkungsgrad zuzüglich eines Hysteresewerts, beispielsweise 2%, erreicht wird. Der Verdichterwirkungsgrad in der Betriebsstellung, in die der Trimmsteller verstellt wird, soll somit beim Verstellen um den Hysteresewert größer sein als der Verdichterwirkungsgrad in der Betriebsstellung, aus der der Trimmsteller verstellt wird. Dadurch kann ein relativ häufiges Verstellen des Trimmstellers bei einem andauernden Betrieb der Brennkraftmaschine in dem Verstellbereich für den Trimmsteller und dadurch eine mögliche mechanische Überlastung des Trimmstellers vermieden werden.

Eine erfindungsgemäße Brennkraftmaschine kann insbesondere Teil eines Kraftfahrzeugs sein. Dabei kann der Verbrennungsmotor der Brennkraftmaschine insbesondere zur direkten oder indirekten Bereitstellung der Fahrantriebsleistung für das Kraftfahrzeug vorgesehen sein. Bei einem solchen Kraftfahrzeug kann es sich insbesondere um ein radbasiertes und nicht schienengebundenen Kraftfahrzeug (vorzugsweise ein PKW oder ein LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungs- und Ausgestaltungsbeispielen näher erläutert. In den Zeichnungen zeigt, jeweils in vereinfachter Darstellung:

Fig. 1: eine erfindungsgemäße Brennkraftmaschine;

Fig. 2: einen Längsschnitt durch einen Verdichter für eine erfindungsgemäße Brennkraftmaschine mit einem dazugehörigen Trimmsteller in einer einen Eintrittsquerschnitt eines Laufrads des Verdichter geringstmöglich abdeckenden Stellung;

Fig. 3: den Verdichter gemäß der Fig. 2 mit dem Trimmsteller in einer den Eintrittsquerschnitt des Verdichterlaufrads weitestmöglich abdeckenden Stellung;

Fig. 4: ein Kennfeld eines Verdichters gemäß den Fig. 2 und 3;

Fig. 5: die Verläufe der Abgasdrücke vor der Abgasturbine eines einen Verdichter gemäß den Fig. 2 und 3 umfassenden Abgasturboladers, jeweils über dem reduzierten Massenstrom des Frischgases durch den Verdichter, einerseits mit dem Trimmsteller des Verdichters in der Abdeckstellung und andererseits mit dem Trimmsteller in der Freigabestellung;

Fig. 6: der Fig. 5 entsprechende Verläufe der Wirkungsgrade des Abgasturboladers;

Fig. 7: der Fig. 5 entsprechende Verläufe der Wirkungsgrade der Abgasturbine;

Fig. 8: der Fig. 5 entsprechende Verläufe der Wirkungsgrade des Verdichters; und

Fig. 9:　der Fig. 5 entsprechende Verläufe der Drehzahlen des Abgasturboladers.

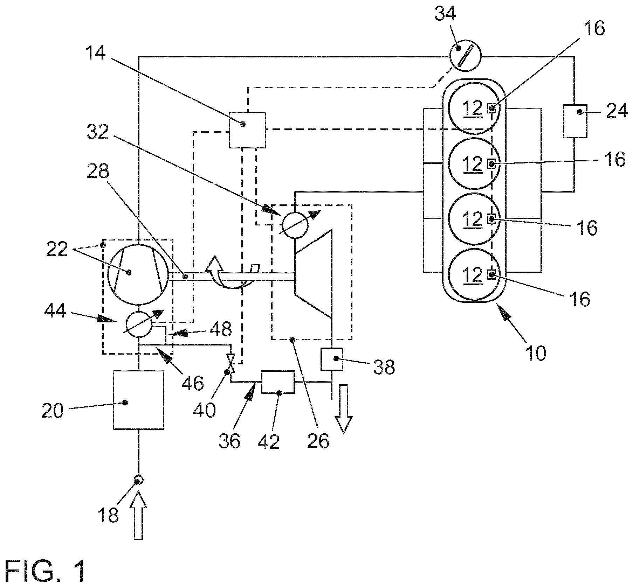

Die Fig. 1 zeigt in schematischer Darstellung eine erfindungsgemäße Brennkraftmaschine mit einem als Ottomotor ausgebildeten Verbrennungsmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas gemeinsam mit Kraftstoff verbrannt wird. Der Kraftstoff wird dabei, gesteuert durch eine Steuerungsvorrichtung 14 (Motorsteuerung), mittels Injektoren 16 direkt in die Brennräume eingespritzt. Das Verbrennen der Kraftstoff-Frischgas-Gemischmengen führt zu zyklischen Auf- und Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird.

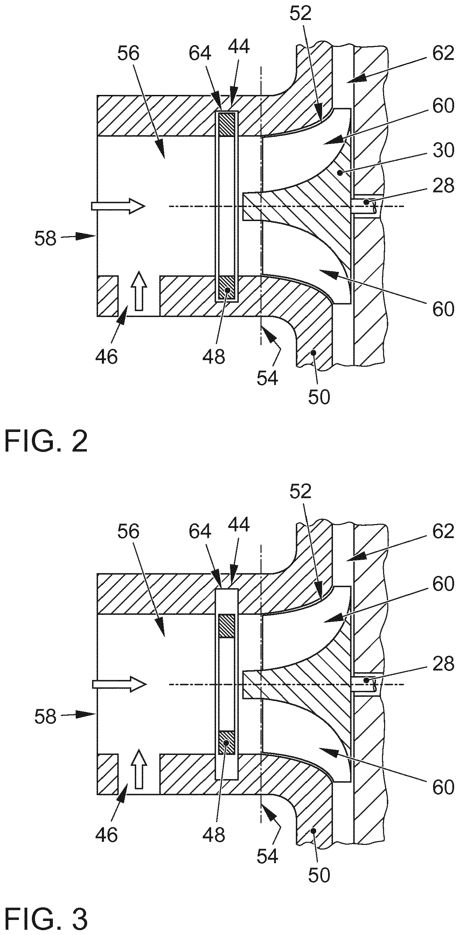

Das Frischgas wird dem Verbrennungsmotor 10 über einen Frischgasstrang zugeführt und dazu über eine Ansaugmündung 18 aus der Umgebung angesaugt, in einem Luftfilter 20 gereinigt und anschließend in einen Verdichter 22, der Teil eines Abgasturboladers ist, geführt. Das Frischgas wird mittels des Verdichters 22 verdichtet, anschließend in einem Ladeluftkühler 24 gekühlt und dann den Brennräumen zugeführt. Der Antrieb des Verdichters 22 erfolgt mittels einer Abgasturbine 26 des Abgasturboladers, die in einen Abgasstrang der Brennkraftmaschine integriert ist. Abgas, das bei der Verbrennung der Kraftstoff-Frischgas-Gemischmengen in den Brennräumen des Verbrennungsmotors 10 entsteht, wird über den Abgasstrang aus dem Verbrennungsmotor 10 abgeführt und durchströmt dabei die Abgasturbine 26. Dies führt in bekannter Weise zu einem rotierenden Antrieb eines Turbinenlaufrads (nicht dargestellt), das über eine Welle 28 drehfest mit einem Verdichterlaufrad 30 (vgl. Fig. 2 und 3) des Verdichters 22 verbunden ist. Der rotierende Antrieb des Turbinenlaufrads wird somit auf das Verdichterlaufrad 30 übertragen.

Um bei einem Betrieb des Verbrennungsmotors 10 mit variierenden Lasten und Drehzahlen eine möglichst optimale Nutzung der Enthalpie des Abgases zur Erzeugung von Verdichtungsleistung mittels des Abgasturboladers zu realisieren, kann die Abgasturbine 26 des Abgasturboladers optional eine mittels der Steuerungsvorrichtung 14 ansteuerbare Vorrichtung zur variablen Turbinenanströmung (VTG) 32 aufweisen. Diese kann in bekannter Weise eine Mehrzahl von in einem Einlasskanal der Abgasturbine 26 angeordneten Leitschaufeln (nicht dargestellt) umfassen, die individuell drehbar ausgebildet sind, wobei diese gemeinsam mittels einer Verstellvorrichtung (nicht dargestellt) verstellbar sind. In Abhängigkeit von den Drehstellungen der Leitschaufeln verengen diese den freien Strömungsquerschnitt in dem Einlasskanal der Abgasturbine 26 mehr oder weniger und beeinflussen zudem den Abschnitt der primären Anströmung des Turbinenlaufrads und die Ausrichtung dieser Anströmung.

Stromab des Verdichters 22 ist in die Ladeluftstrecke, d.h. in denjenigen Abschnitt des Frischgasstrangs, der zwischen dem Verdichter 22 und dem Verbrennungsmotor 10 gelegen ist, eine ebenfalls mittels der Steuerungsvorrichtung 14 ansteuerbare Drosselklappe 34 integriert.

Die Brennkraftmaschine kann eine Abgasrückführleitung 36 zur Realisierung einer (Niederdruck-)Abgasrückführung umfassen, bei der Abgas aus einem Abschnitt des Abgasstrangs, der stromab der Abgasturbine 26 und insbesondere auch stromab einer Abgasnachbehandlungsvorrichtung 38, beispielsweise eines Partikelfilters, gelegen ist, abgezweigt und in einen Abschnitt des Frischgasstrangs stromauf des Verdichterlaufrads 30 eingeleitet werden kann. Die Menge des über die Abgasrückführleitung 36 rückzuführenden Abgases kann dabei mittels eines Regelventils 40, das mittels der Steuerungsvorrichtung 14 ansteuerbar ist, gesteuert oder geregelt werden. Weiterhin kann in die Abgasrückführleitung 36 ein Abgaskühler 42 zur Kühlung des darüber geführten Abgases integriert sein.

Dem Verdichter 22 ist ein Trimmsteller 44 zugeordnet, mittels dessen die Anströmung des Verdichterlaufrads 30 durch das Frischgas beeinflusst werden kann. Dazu ist der Trimmsteller 44 beziehungsweise ein dazugehöriger Aktor (nicht dargestellt) mittels der Steuerungsvorrichtung 14 ansteuerbar. Die Abgasrückführleitung 36 kann stromauf beziehungsweise auf der von dem Verdichterlaufrad 30 abgewandten Seite des Trimmstellers 44 in den Frischgasstrang münden. Ein Mündung stromab oder im Bereich des Trimmstellers 44 (und stromauf des Verdichterlaufrads 30) ist ebenfalls möglich.

Die Fig. 2 und 3 zeigen jeweils in einem Längsschnitt eine mögliche Ausgestaltungsform für einen Verdichter 22 einer erfindungsgemäßen Brennkraftmaschine. Dieser Verdichter 22 kann beispielsweise für eine Brennkraftmaschine gemäß der Fig. 1 vorgesehen sein, wobei dann der Trimmsteller 44 und ein Anschlusskanal 46 für die Abgasrückführleitung 36 integrale Bestandteile des Verdichters 22 sind. Dies ist in der Fig. 1 durch einen gestrichelten Rahmen angedeutet.

Der Verdichter 22 gemäß den Fig. 2 und 3 umfasst ein Gehäuse 50, das ein Teilgehäuse eines Gesamtgehäuses eines Abgasturboladers darstellen kann. Das Gehäuse 50 des Verdichters 22 bildet einen Strömungsraum 52 aus, innerhalb dessen das Verdichterlaufrad 30 drehbar gelagert ist. Einlassseitig weist der Strömungsraum 52 einen in einer Eintrittsebene 54 liegenden Eintrittsquerschnitt auf. Über einen ebenfalls von dem Gehäuse 50 des Verdichters 22 ausgebildeten Einlasskanal 56 kann Frischgas von einem Verdichtereinlass 58 zu dem Verdichterlaufrad 30 geführt werden. Auslassseitig wird der Strömungsraum 52 von einer um Austrittskanten von Laufradschaufeln 60 des Verdichterlaufrads 30 umlaufenden "Austrittsebene" begrenzt. Dort schließt sich ein ebenfalls um die Austrittskanten der Laufradschaufeln 60 umlaufender Diffusorraum 62 und daran anschließend, was in den Fig. 2 und 3 nicht mehr dargestellt ist, eine Verdichtervolute an. Aus der Verdichtervolute geht ein Verdichterauslass (ebenfalls nicht dargestellt) ab.

Innerhalb des Einlasskanals 56 ist der Trimmsteller 44 in einer möglichst kurzen Entfernung zu dem Eintrittsquerschnitt des Verdichterlaufrads 30 angeordnet. Der Trimmsteller 44 umfasst eine Irisblende 48 mit einem grundsätzlich auch von Fotoobjektiven bekannten Aufbau. In einer Abdeckstellung gemäß der Fig. 3 verhindert der Trimmsteller 44 weitestmöglich eine Anströmung des Verdichterlaufrads 30 durch Frischgas, das in Richtung des Verdichterlaufrads 30 strömt, in einem randseitig gelegenen, ringförmigen Bereich des Eintrittsquerschnitts. Der Trimmsteller 44 fokussiert dadurch diese Frischgasströmung auf einen nabennahen Abschnitt des Verdichterlaufrads 30. In einer Freigabestellung gemäß der Fig. 2 kann das Frischgas dagegen über den gesamten Eintrittsquerschnitt in das Verdichterlaufrad 30 einströmen. Die die Irisblende 48 ausbildenden Blendenelemente, die jeweils zum Öffnen oder Schließen der Irisblende 48 um eine Achse verschwenkbar innerhalb des Gehäuses 50 gelagert sind, sind in der Freigabestellung vollständig in einer ringförmigen Vertiefung 64 des Gehäuses 50 angeordnet.

Erfindungsgemäß ist vorgesehen, dass bei einem Betrieb einer Brennkraftmaschine gemäß der Fig. 1 der Trimmsteller 44 zwischen der Freigabestellung und der Abdeckstellung verstellt wird, wenn in diesen beiden Betriebsstellungen dasselbe Verdichterdruckverhältnis $\pi_V$, derselbe (reduzierte) Frischgasmassenstrom ($\dot{m}_{red}$) und im Wesentlichen derselbe Verdichterwirkungsgrad $\eta_V$ erreicht wird. Ein Verstellen des Trimmstellers 44 bei nur "im Wesentlichen" demselben Verdichterwirkungsgrad $\eta_V$ erfolgt deswegen, weil der theoretische Verstellpunkt zwar sowohl durch dieselben Werte für das Verdichterdruckverhältnis $\pi_V$ und den reduzierten Frischgasmassenstrom $\dot{m}_{red}$ als auch durch dieselben Werte für den Verdichterwirkungsgrad $\eta_V$ definiert ist, für das tatsächliche Verstellen jedoch eine Hysterese vorgesehen ist, wodurch ein relativ häufiges Verstellen des Trimmstellers 44 bei einem länger andauernden Betrieb der Brennkraftmaschine im Bereich des theoretischen Verstellpunkts vermieden werden soll. Der entsprechende Hysteresewert beträgt hier beispielhaft 2%.

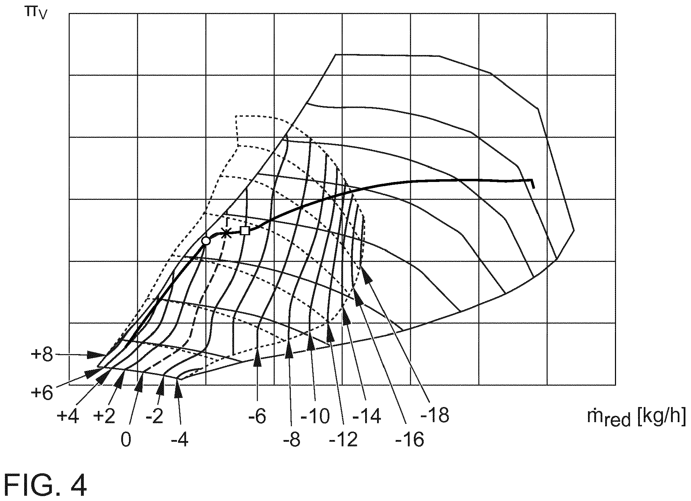

Um einen diesen Hysteresewert berücksichtigenden Umschaltbereich für den Verdichter 22 zu ermitteln, werden in einem Applikationsbetrieb der Brennkraftmaschine in bekannter Weise die beiden Verdichterkennfelder für einen Betrieb des Verdichters 22 mit dem Trimmsteller 44 in einerseits der Freigabestellung und in andererseits der Abdeckstellung ermittelt und zueinander in Bezug gesetzt, wie dies beispielhaft in der Fig. 4 dargestellt ist. Das Verdichterkennfeld, das mit durchgezogenen Linien gezeichnet ist, ist dabei dasjenige, das den Betrieb des Verdichters 22 mit dem Trimmsteller 44 in der Freigabestellung beschreibt, während das Verdichterkennfeld, das mit gepunkteten Linien gezeichnet ist, den Betrieb des Verdichters 22 mit dem Trimmsteller 44 in der Abdeckstellung charakterisiert.

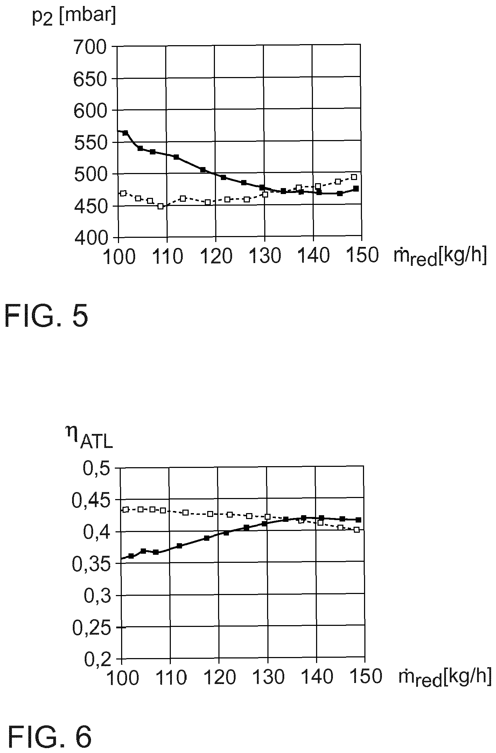

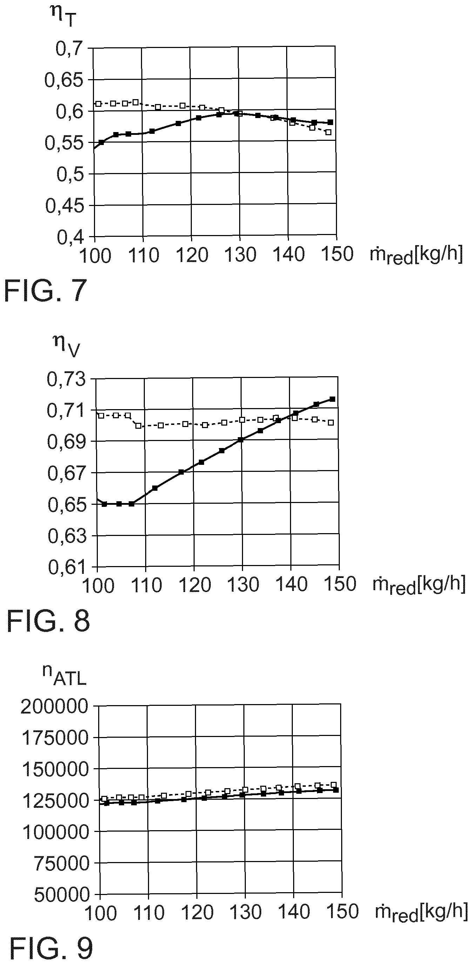

Weiterhin wird für eine Mehrzahl von definierten Verdichterdruckverhältnissen $\pi_V$ jeweils der Verdichterwirkungsgrad $\eta_V$ in einem Betrieb mit einerseits dem Trimmsteller 44 in der Freigabestellung und andererseits mit dem Trimmsteller 44 in der Abdeckstellung ermittelt. Dabei wird der Verdichterwirkungsgrad $\eta_V$ jeweils in Abhängigkeit von einer Messung des Drucks des Abgases in dem Abgasstrang der Brennkraftmaschine stromauf der Abgasturbine 26 ermittelt. Die beiden entsprechenden Verläufe (über dem reduzierten Frischgasmassenstrom), einmal für den Trimmsteller 44 in der Freigabestellung (durchgezogene Linie) sowie für den Trimmsteller 44 in der Abdeckstellung (gepunktete Linie) sind in der Fig. 5 für ein beispielhaftes Verdichterdruckverhältnis $\pi_V$, das auf einem Ladedruck $p_2$ von 1600 mbar basiert, ermittelt. Die entsprechenden Verläufe für die Wirkungsgrade $\eta_{ATL}$ des Abgasturboladers insgesamt (Fig. 6) und für die diese Wirkungsgrade $\eta_{ATL}$ des Abgasturboladers beeinflussenden Wirkungsgrade $\eta_T$, $\eta_V$ der Abgasturbine 26 (Fig. 7) und des Verdichters 22 (Fig. 8) sind in weiteren Diagramm dargestellt. Das Diagramm der Fig. 9 zeigt ergänzend die Verläufe für die Drehzahlen $n_{ATL}$ des Abgasturboladers während der entsprechenden Messungen.

In das (doppelte) Kennfeld gemäß der Fig. 1 werden für denjenigen Bereich, in dem sich die beiden Verdichterkennfelder überschneiden und in dem folglich grundsätzlich ein Betrieb des Verdichters 22 mit dem Trimmsteller 44 in entweder der Abdeckstellung oder der Freigabestellung möglich ist, Kurven eingezeichnet, die verschiedenen Werten der Wirkungsgradunterschiede zwischen den beiden Betriebsstellungen des Trimmstellers 44 entsprechen. Positive Prozentualwerte bezeichnen dabei einen Wirkungsgradvorteil für einen Betrieb des Verdichters 22 mit dem Trimmsteller 44 in der Abdeckstellung, während negative Prozentualwerte einen Wirkungsgradvorteil für einen Betrieb des Verdichters 22 mit dem Trimmsteller 44 in der Freigabestellung kennzeichnen. Mit gestrichelter Linie ist dabei diejenige (Egalitäts-)Kurve eingezeichnet, auf der die Verdichterwirkungsgrade $\eta_V$ identisch beziehungsweise die Wirkungsgradunterschiede null sind. Ein theoretischer Verstellpunkt für ein Verstellen des Trimmstellers 44 zwischen der Freigabestellung und der Abdeckstellung für ein definiertes Verdichterdruckverhältnis $\pi_V$ und einen definierten reduzierten Frischgasmassenstrom $\dot{m}_{red}$ liegt folglich auf dieser Kurve, wobei für ein tatsächliches Verstellen ein Hysteresewert von 2% berücksichtigt wird. Wird demnach beispielsweise der Verdichter 22 mit dem Trimmsteller 44 in der Freigabestellung bei einem konkreten Verdichterdruckverhältnis $\pi_V$ und einem konkreten reduzierten Frischgasmassenstrom $\dot{m}_{red}$ betrieben, in dem sich ein Wirkungsgradvorteil im Vergleich zu einem entsprechenden Betrieb mit dem Trimmsteller 44 in der Abdeckstellung einstellt (d.h. die Lage eines solchen Betriebspunkts wäre in dem Kennfeld der Fig. 4 rechts der gestrichelten Kurve), und verändert sich im weitergehenden Betrieb das Verdichterdruckverhältnis $\pi_V$ und/oder der reduzierte Frischgasmassenstrom $\dot{m}r_{ed}$ derart, dass sich dieser Betriebspunkt in Richtung der gestrichelten Egalitätskurve verschiebt, so wird der Trimmsteller nicht bereits beim Erreichen der gestrichelten Egalitätskurve verstellt, sondern erst dann, wenn (und sofern) der Betriebspunkt die Kurve für den zweiprozentigen Wirkungsgradvorteil (Hysteresewert) eines Betriebs des Verdichters 22 mit dem Trimmsteller 44 in der Abdeckstellung erreicht. In der Fig. 4 ist dies für die beispielhaft eingetragene Volllastkurve anhand eines Kreuzes, das den theoretischen Verstellpunkt kennzeichnet, und eines Kreises, das den tatsächlichen Verstellpunkt kennzeichnet, dargestellt. In gleicher Weise würde eine Verstellung von der Abdeckstellung in die Freigabestellung erst beim Erreichen eines diesbezüglichen Wirkungsgradvorteils von 2% erfolgen, wie dies in der Fig. 4 anhand des durch ein Rechteck gekennzeichneten Verstellpunkts auf der Volllastkurve gezeigt ist.

**BEZUGSZEICHENLISTE**

| | |
|---|---|
| 10 | Verbrennungsmotor |
| 12 | Zylinder |
| 14 | Steuerungsvorrichtung |
| 16 | Injektor |
| 18 | Ansaugmündung |
| 20 | Luftfilter |
| 22 | Verdichter |
| 24 | Ladeluftkühler |
| 26 | Abgasturbine |
| 28 | Welle |
| 30 | Verdichterlaufrad |
| 32 | Vorrichtung zur variablen Turbinenanströmung |
| 34 | Drosselklappe |
| 36 | Abgasrückführleitung |
| 38 | Abgasnachbehandlungsvorrichtung |
| 40 | Regelventil |
| 42 | Abgaskühler |
| 44 | Trimmsteller |
| 46 | Anschlusskanal |
| 48 | Irisblende |
| 50 | Gehäuse des Verdichters |
| 52 | Strömungsraum |
| 54 | Eintrittsebene des Verdichterlaufrads |
| 56 | Einlasskanal |
| 58 | Verdichtereinlass |
| 60 | Laufradschaufel |
| 62 | Diffusorraum |
| 64 | Vertiefung des Gehäuses |

| | |
|---|---|
| $\pi_V$ | Verdichterdruckverhältnis |
| $p_2$ | Druck in der Ladeluftstrecke |
| $\eta_{ATL}$ | Wirkungsgrad des Abgasturboladers |
| $\eta_T$ | Wirkungsgrad der Abgasturbine |
| $\eta_V$ | Wirkungsgrad des Verdichters |
| $n_{ATL}$ | Drehzahl des Abgasturboladers |
| $\dot{m}r_{ed}$ | reduzierter Frischgasmassenstrom |

**Patentansprüche**

1. Verfahren zum Betreiben einer Brennkraftmaschine mit einem Verbrennungsmotor (10) und einem Frischgasstrang, wobei in den Frischgasstrang ein Verdichter (22) integriert ist und wobei dem Verdichter (22) ein Trimmsteller (44) zugeordnet ist, durch den ein randseitiger Abschnitt des Eintrittsquerschnitts eines Verdichterlaufrads (30) des Verdichters (22) in veränderlichem Maße abdeckbar ist, wobei der randseitige Abschnitt des Eintrittsquerschnitts in einer Freigabestellung des Trimmstellers (44) relativ wenig und in einer Abdeckstellung des Trimmstellers (44) relativ weitgehend abgedeckt ist, **dadurch gekennzeichnet, dass** der Trimmsteller (44) zwischen der Freigabestellung und der Abdeckstellung verstellt wird, wenn in den beiden Betriebsstellungen dasselbe Verdichterdruckverhältnis ($\pi_V$) und derselbe Frischgasmassenstrom ($\dot{m}$) sowie im Wesentlichen derselbe Verdichterwirkungsgrad ($\eta_V$) erreicht wird.

2. Verfahren gemäß Anspruch 1, **dadurch gekennzeichnet, dass** der Trimmsteller (44) den randseitigen Abschnitt des Eintrittsquerschnitts in der Freigabestellung geringstmöglich abdeckt und/oder in der Abdeckstellung weitestmöglich abdeckt.

3. Verfahren gemäß Anspruch 1 oder 2, **dadurch gekennzeichnet, dass** der Verdichterwirkungsgrad ($\eta_V$) basierend auf einem Messwert für den Druck des Abgases in einem Abgasstrang der Brennkraftmaschine stromauf einer Abgasturbine (26), die drehantreibend mit dem Verdichter (22) verbunden ist, ermittelt wird.

4. Verfahren gemäß einem der vorhergehenden Ansprüche, **dadurch gekennzeichnet, dass** in einem Applikationsbetrieb der Brennkraftmaschine für eine Mehrzahl von Betriebszuständen jeweils die Abgasdrücke stromaufwärts der Abgasturbine mit dem Trimmsteller in einerseits der Freigabestellung und in andererseits der Abdeckstellung ermittelt und davon ausgehend ein Verstellbereich für sämtliche Betriebszustände abgeleitet wird, wobei der ermittelte Verstellbereich für einen Normalbetrieb der Brennkraftmaschine genutzt wird.

5. Verfahren gemäß einem der vorhergehenden Ansprüche, **dadurch gekennzeichnet, dass** der Trimmsteller (44) zwischen der Freigabestellung ($S_{T1}$) und der Abdeckstellung ($S_{T2}$) verstellt wird,

wenn derselbe Verdichterwirkungsgrad ($\eta_V$) zuzüglich eines Hysteresewerts erreicht wird.

6. Brennkraftmaschine mit einem Verbrennungsmotor (10) und einem Frischgasstrang, wobei in den Frischgasstrang ein Verdichter (22) integriert ist und wobei dem Verdichter (22) ein Trimmsteller (44) zugeordnet ist, durch den ein randseitiger Abschnitt des Eintrittsquerschnitts eines Verdichterlaufrads (30) des Verdichters (22) in veränderlichem Maße abdeckbar ist, wobei der randseitige Abschnitt des Eintrittsquerschnitts in einer Freigabestellung des Trimmstellers (44) relativ wenig und in einer Abdeckstellung des Trimmstellers (44) relativ weitgehend abgedeckt ist, **gekennzeichnet durch** eine Steuerungsvorrichtung (14), die zur automatisierten Durchführung eines Verfahrens gemäß einem der vorhergehenden Ansprüche eingerichtet ist.

7. Brennkraftmaschine gemäß Anspruch 6, **dadurch gekennzeichnet, dass** der Trimmsteller (44) eine ringförmige Blende (48) umfasst.

8. Brennkraftmaschine gemäß Anspruch 7, **dadurch gekennzeichnet, dass** der Trimmsteller (44) zusätzlich eine Strömungsführungsvorrichtung umfasst, durch die zumindest ein Abschnitt des Frischgasstrangs in einen zentralen Strömungsbereich und einen peripheren Strömungsbereich unterteilt ist, die beide in dem Bereich der Eintrittsebene (54) des Verdichterlaufrads (30) in einen Strömungsraum (52) des Verdichters (22) übergehen, wobei der periphere Strömungsbereich mittels der Blende (48) verschließbar ausgebildet ist.

9. Brennkraftmaschine gemäß Anspruch 8, **dadurch gekennzeichnet, dass** zumindest ein zu dem Verdichterlaufrad (30) benachbart gelegener Endabschnitt der Strömungsführungsvorrichtung längsaxial verschiebbar ausgebildet ist, wobei der periphere Strömungsbereich in dem Bereich der Eintrittsebene (54) des Verdichterlaufrads (30) in einer Verschlussstellung der Strömungsführungsvorrichtung durch diesen Endabschnitt verschlossen und in einer Öffnungsstellung freigegeben ist.

10. Brennkraftmaschine gemäß einem der Ansprüche 6 bis 9, **dadurch gekennzeichnet, dass** in einen Abgasstrang der Brennkraftmaschine stromauf einer Abgasturbine (26) ein Abgasdrucksensor integriert ist.

FIG. 1

FIG. 2

FIG. 3

$\dot{m}_{red}$ [kg/h]

$\pi_V$

-18
-16
-14
-12
-10
-8
-6
-4
-2
0
+2
+4
+6
+8

FIG. 4

p2 [mbar]

FIG. 5

$\eta_{ATL}$

FIG. 6

FIG. 7

FIG. 8

FIG. 9

Europäisches
Patentamt

European
Patent Office

Office européen
des brevets

# EUROPÄISCHER RECHERCHENBERICHT

Nummer der Anmeldung

EP 19 18 2697

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 543 538 A1 (GARRETT TRANSP I INC [US]) 25. September 2019 (2019-09-25) * Zusammenfassung; Abbildungen 1-9 * ----- | 1,2,5-9 | INV. F02B37/22 F02B37/24 F02M26/06 |
| X | EP 3 176 440 A1 (HONEYWELL INT INC [US]) 7. Juni 2017 (2017-06-07) | 1,2,5-9 | F04D27/02 F02D41/00 |
| Y | * Zusammenfassung; Abbildungen 1-8 * * Absätze [0009], [0010], [0025] - [0028] * ----- | 3,4,10 | F02D41/14 F04D25/04 F04D29/42 |
| X | DE 10 2015 203551 A1 (VOLKSWAGEN AG [DE]) 1. September 2016 (2016-09-01) * Zusammenfassung; Abbildungen 1,6-10 * * Absätze [0049], [0050], [0055], [0057], [0061] * ----- | 1,2,5-9 | ADD. F02B37/12 |
| Y | WO 01/55575 A1 (INT TRUCK & ENGINE CORP [US]) 2. August 2001 (2001-08-02) * Zusammenfassung * ----- | 3,4,10 | |
| A | WO 2013/074503 A1 (HONEYWELL INT INC [US]) 23. Mai 2013 (2013-05-23) * Zusammenfassung; Abbildungen 1-15 * ----- | 1-10 | **RECHERCHIERTE SACHGEBIETE (IPC)** |
| A,D | DE 10 2015 209704 A1 (VOLKSWAGEN AG [DE]) 4. August 2016 (2016-08-04) * Zusammenfassung; Abbildungen 1-9 * ----- | 8 | F02B F02M F04D F02D |
| A | DE 10 2012 011423 B3 (AUDI AG [DE]) 7. November 2013 (2013-11-07) * Zusammenfassung; Abbildungen 1-5 * ----- | 9 | |

Der vorliegende Recherchenbericht wurde für alle Patentansprüche erstellt

| Recherchenort | Abschlußdatum der Recherche | Prüfer |
|---|---|---|
| München | 22. November 2019 | Mineau, Christophe |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 18 2697

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2019

| Im Recherchenbericht angeführtes Patentdokument | Datum der Veröffentlichung | Mitglied(er) der Patentfamilie | Datum der Veröffentlichung |
|---|---|---|---|
| EP 3543538 A1 | 25-09-2019 | CN 110284962 A<br>EP 3543538 A1<br>US 2019285086 A1 | 27-09-2019<br>25-09-2019<br>19-09-2019 |
| EP 3176440 A1 | 07-06-2017 | CN 106907234 A<br>EP 3176440 A1<br>US 2017152862 A1 | 30-06-2017<br>07-06-2017<br>01-06-2017 |
| DE 102015203551 A1 | 01-09-2016 | KEINE | |
| WO 0155575 A1 | 02-08-2001 | AT 310159 T<br>AU 3450301 A<br>BR 0107977 A<br>CA 2397972 A1<br>DE 60114987 T2<br>EP 1250523 A1<br>JP 4603752 B2<br>JP 2003527520 A<br>MX PA02007228 A<br>US 2001032465 A1<br>WO 0155575 A1 | 15-12-2005<br>07-08-2001<br>13-01-2004<br>02-08-2001<br>27-07-2006<br>23-10-2002<br>22-12-2010<br>16-09-2003<br>30-07-2004<br>25-10-2001<br>02-08-2001 |
| WO 2013074503 A1 | 23-05-2013 | CN 103917760 A<br>EP 2780568 A1<br>US 2014308110 A1<br>WO 2013074503 A1 | 09-07-2014<br>24-09-2014<br>16-10-2014<br>23-05-2013 |
| DE 102015209704 A1 | 04-08-2016 | KEINE | |
| DE 102012011423 B3 | 07-11-2013 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010026176 A1
- EP 3018355 A1
- DE 102015209704 A1
- DE 102014225716 A1
- WO 2014131790 A1
- WO 2004022956 A1